# FASCICULE DE BREVET EUROPEEN

(11) **EP 2 291 607 B1**
(45) Date de publication et mention de la délivrance du brevet: **01.01.2020**
(21) Numéro de dépôt: 09765792.8
(22) Date de dépôt: 11.06.2009
(51) Int. Cl.: G01C 5/06, G01C 25/00

(54) **INSTRUMENT DE CALIBRATION D'UN DISPOSITIF ALTIMETRIQUE**
GERÄT ZUR EICHUNG EINER HÖHENMESSVORRICHTUNG
INSTRUMENT FOR CALIBRATING AN ALTIMETRIC DEVICE

(30) Priorité: 16.06.2008 EP 08158353
(43) Date de publication de la demande: 09.03.2011
(73) Titulaire: EM Microelectronic-Marin SA, 2074 Marin (CH)
(72) Inventeur: WILLEMIN, Michel, CH-2525 Prêles (CH)
(74) Mandataire: Giraud, Eric
(86) Numéro de dépôt international: PCT/EP2009/057243
(87) Numéro de publication internationale: WO 2009/153212

(56) Documents cités:
- EP-A- 1 136 788
- EP-A- 1 154 231
- WO-A-00/77473
- US-A1- 2001 004 603
- US-A1- 2005 272 447

## Description

La présente invention concerne un instrument de calibration d'un dispositif altimétrique. Plus précisément, la présente invention concerne un instrument permettant de calibrer automatiquement un dispositif fournissant à son utilisateur une indication altimétrique sur la base de la pression atmosphérique.

Il existe sur le marché divers dispositifs indiquant à leurs utilisateurs l'altitude du lieu où ceux-ci se trouvent. A titre d'exemple, on peut citer la montre commercialisée par la société horlogère suisse Tissot sous la marque T-Touch®. Par un simple effleurement d'une touche tactile, le porteur d'une montre Tissot peut instantanément connaître l'altitude à laquelle il se trouve. Néanmoins, l'inconvénient de la montre Tissot tout comme des autres dispositifs altimétriques réside dans le fait que la détermination altimétrique se fait sur la base de la pression atmosphérique qui est sujette à variations aussi bien temporelles que géographiques. Par conséquent, si la pression atmosphérique du lieu où se trouve l'utilisateur du dispositif altimétrique change, l'indication altimétrique fournie par ledit dispositif altimétrique va fluctuer. Si l'utilisateur connaît l'altitude exacte du lieu où il se trouve, il peut recalibrer son dispositif altimétrique. Sinon, l'utilisateur doit consulter une carte routière, Internet ou toute autre source d'information pour connaître l'altitude à laquelle il se trouve. Une fois en possession de cette information, il peut recalibrer son dispositif altimétrique. Néanmoins, pour la plupart des dispositifs altimétriques, l'étape de recalibration requiert une succession d'opérations assez complexe, ce qui rend cette recalibration fastidieuse pour l'utilisateur.

Le système de positionnement par satellite connu sous sa dénomination anglo-saxonne « Global Positioning System » ou « GPS » est maintenant couramment employé par exemple pour repérer le positionnement d'un véhicule automobile à la surface de la Terre. Il en sera bientôt de même avec le système européen Galileo. Il est des cas où le système GPS doit utiliser l'information d'altitude pour pouvoir déterminer la position d'un objet. Ceci est typiquement le cas lorsque la topologie n'est pas univoque, c'est-à-dire lorsqu'à un même point du globe correspondent des altitudes différentes. Imaginons en effet un endroit d'une ville entouré de gratte-ciel sur lesquels les signaux satellites se réfléchissent ou bien encore un entrelacs d'autoroutes en milieu urbain. Il n'est pas rare en effet qu'en différents endroits, une portion d'autoroute en enjambe une autre. Pour pouvoir déterminer sur quelle portion d'autoroute se trouve le véhicule automobile, le système GPS doit donc connaître avec précision l'altitude à laquelle se trouve ledit véhicule. Or, la précision du système GPS est meilleure dans le plan qu'en hauteur. C'est pourquoi il est courant d'équiper les systèmes GPS d'un système de détermination de l'altitude. Néanmoins, ces systèmes de détermination d'altitude sont basés sur la mesure de la pression atmosphérique. Afin qu'ils puissent fournir au système GPS une indication d'altitude fiable, il est nécessaire de les recalibrer périodiquement. Or, à la connaissance de la demanderesse, il n'existe pas de moyen pour recalibrer automatiquement un dispositif altimétrique et c'est donc à l'utilisateur qu'incombe la charge d'effectuer manuellement cette opération.

Le document WO00/77473 A, décrit un instrument de calibration pour un dispositif altimétrique de type altimètre barométrique, comprenant des moyens pour émettre un signal portant une information représentative de l'altitude à laquelle il est installé. L'instrument et le dispositif sont intégrés dans un seul appareil, de type montre-bracelet, par exemple.

En outre, le document US2001/004603 A1, divulgue un instrument de calibration pour un dispositif altimétrique dans un réseau de téléphonie cellulaire, fournissant une indication de l'altitude du lieu où il se trouve sur la base d'une mesure de la pression atmosphérique, comprenant des moyens pour émettre à distance, périodiquement et de manière automatique, un signal portant une information représentative de l'altitude à laquelle il est installé.

La présente invention a pour but de pallier les inconvénients susmentionnés ainsi que d'autres encore en procurant un instrument réalisant automatiquement la calibration d'un dispositif altimétrique.

A cet effet, la présente invention concerne un système de calibration d'un dispositif altimétrique, selon la revendication 3, ce dispositif altimétrique comprenant des moyens pour fournir, sur la base d'une mesure de la pression atmosphérique, une indication de l'altitude du lieu où se trouve le dispositif altimétrique. Ce système comprend un instrument de calibration qui émet un signal portant une information représentative de l'altitude à laquelle ledit instrument de calibration est disposé, ce signal étant détecté par le dispositif altimétrique qui utilise l'information d'altitude pour recalibrer les moyens fournissant l'indication d'altitude.

La présente invention concerne aussi un instrument de calibration pour un dispositif altimétrique fournissant une indication de l'altitude du lieu où il se trouve sur la base d'une mesure de la pression atmosphérique, selon la revendication 1.

La présente invention concerne également un dispositif altimétrique comprenant des moyens pour fournir une indication de l'altitude du lieu où il se trouve sur la base d'une mesure de la pression atmosphérique, selon la revendication 2, ainsi qu'un procédé d'étalonnage d'un dispositif altimétrique au moyen d'un instrument de calibration, selon la revendication 4.

La présente invention procure un système permettant de recalibrer automatiquement un dispositif altimétrique fournissant à son utilisateur une indication de l'altitude à laquelle il se trouve sur la base d'une mesure de la pression atmosphérique. En effet, l'instrument de calibration émet un signal portant une information relative à l'altitude de l'emplacement où il est implanté. Cette altitude est déterminée au moment où l'instrument de calibration est implanté et n'a pas pour vocation de changer puisque ledit instrument de calibration est destiné à rester définitivement à l'endroit où il a été installé. Par suite, lorsque l'utilisateur passe avec son dispositif altimétrique à proximité de l'instrument de calibration, le dispositif altimétrique capte le signal émis par l'instrument de calibration et utilise l'information représentative de l'altitude portée par ce signal pour recaler ses moyens de détermination de l'altitude.

De multiples instruments de calibration peuvent être placés en tout endroit imaginable. A la maison, il peut par exemple être installé dans le garage, de sorte que le dispositif altimétrique associé au système GPS du véhicule automobile sera recalibré à chaque fois que le véhicule pénètrera dans le garage. L'instrument de calibration peut aussi être placé par exemple sur une table de nuit dans le cas où le dispositif de détermination de l'altitude est intégré dans une montre-bracelet. Le dispositif altimétrique sera ainsi recalé chaque soir lorsque le porteur posera sa montre sur sa table de nuit.

Dans le cas des applications domestiques (bureau, maison, garage, etc.), on peut envisager que l'instrument de calibration émette son signal de calibration à fréquence basse, par exemple une fois toutes les quinze minutes, pendant une durée d'une milliseconde à chaque fois. Au contraire, dans les lieux fréquentés (restaurants, hôtels, campings, etc.) ou encore le long des routes, on peut envisager que l'instrument de calibration émette le signal de calibration à fréquence élevée, par exemple une fois toutes les deux ou trois secondes, pour une durée d'une milliseconde à chaque fois.

L'instrument de calibration est selon l'invention, un appareil basse puissance, alimenté par une pile, son autonomie est d'un an environ. Il comprend également, selon l'invention, une mémoire non volatile dans laquelle l'altitude du lieu où il est implanté est programmée. Il comprend également des moyens d'émission d'un signal portant l'information d'altitude. Le signal peut être un signal radiofréquence. Toutefois, selon l'invention, le signal est un signal infrarouge ou bien encore un signal ultrasonore. Quant au dispositif altimétrique, il doit notamment comprendre, outre les moyens nécessaires pour mesurer la pression atmosphérique, des moyens pour recevoir le signal émis par l'instrument et mémoriser l'information d'altitude reçue. Ainsi, selon le cas, le dispositif altimétrique comprendra des moyens de réception d'un signal radiodiffusé, ou selon l'invention, d'un signal infrarouge ou d'un signal ultrasonore.

Dans sa variante la plus simple, le dispositif altimétrique peut comprendre de simples circuits logiques qui vont mettre en œuvre un algorithme approprié permettant de remplacer la valeur d'altitude calculée par la valeur d'altitude reçue de l'instrument de calibration. Bien entendu, le dispositif altimétrique peut également comprendre un circuit microcontrôleur notamment dans le cas où il est équipé de moyens d'affichage, par exemple à cristaux liquides, qui vont afficher la nouvelle valeur d'altitude transmise par l'instrument de calibration selon l'invention.

## Revendications

1. Instrument de calibration pour un dispositif altimétrique fournissant une indication de l'altitude du lieu où il se trouve sur la base d'une mesure de la pression atmosphérique, **caractérisé en ce qu'**il s'agit d'un appareil basse puissance alimenté par une pile et qui comprend une mémoire non volatile dans laquelle l'altitude du lieu où il est installé est programmée et des moyens infrarouges ou ultrasonores pour émettre à distance, périodiquement et de manière automatique, un signal portant une information représentative de ladite altitude à laquelle il est installé.

2. Dispositif altimétrique comprenant des moyens pour fournir une indication de l'altitude du lieu où il se trouve sur la base d'une mesure de la pression atmosphérique, **caractérisé en ce qu'**il comprend en outre des moyens infrarouges ou ultrasonores configurés pour recevoir de l'instrument de calibration selon la revendication 1, à distance et de manière passive, un signal portant une information relative à l'altitude du lieu où il se trouve et pour utiliser cette information pour recaler lesdits moyens fournissant une indication de l'altitude.

3. Système de calibration d'un dispositif altimétrique, ce dispositif altimétrique comprenant des moyens pour fournir, sur la base d'une mesure de la pression atmosphérique, une indication de l'altitude du lieu où il se trouve, le système de calibration étant **caractérisé en ce qu'**il comprend un instrument de calibration basse puissance alimenté par une pile et comportant une mémoire non volatile dans laquelle l'altitude du lieu où il est installé est programmée et des moyens infrarouges ou ultrasonore pour émettre à distance, périodiquement et de manière automatique, un signal portant une information représentative de ladite altitude à laquelle ledit instrument de calibration est installé, ce signal étant détecté à distance et de manière passive par le dispositif altimétrique qui utilise l'information d'altitude pour recaler les moyens fournissant l'indication d'altitude.

4. Procédé d'étalonnage d'un dispositif altimétrique comprenant des moyens pour fournir, sur la base d'une mesure de la pression atmosphérique, une indication de l'altitude du lieu où il se trouve, le procédé étant réalisé au moyen d'un instrument de calibration basse puissance alimenté par une pile et comprenant une mémoire non volatile dans laquelle est programmée l'altitude du lieu où est installé l'instrument de calibration, le procédé comprenant une étape qui consiste, au moyen de l'instrument de calibration, à envoyer à distance, périodiquement et de manière automatique un signal infrarouge ou ultrasonore portant l'information relative à ladite altitude du lieu où est installé l'instrument de calibration et comprenant une étape de réception dudit signal portant ladite information par des moyens de réception infrarouges ou ultrasonores du dispositif altimétrique lorsque ce dernier passe au voisinage dudit instrument de calibration, ledit dispositif altimétrique utilisant ladite information pour recaler lesdits moyens fournissant l'indication d'altitude.

## Patentansprüche

1. Kalibrierinstrument für eine Höhenmessvorrichtung, die eine Angabe der Höhe des Ortes, an dem sie sich befindet, anhand einer Messung des Atmosphärendrucks bereitstellt, **dadurch gekennzeichnet, dass** es sich um ein batteriebetriebenes Gerät mit niedriger Leistung handelt, das einen nichtflüchtigen Speicher, in dem die Höhe des Ortes, an dem es sich befindet, programmiert ist, und Infrarot- oder Ultraschallmittel zum periodischen und automatischen Fernübertragen eines Signals umfasst, das Informationen trägt über die Höhe, in der es sich befindet.

2. Höhenmessvorrichtung, umfassend Mittel, um eine Angabe der Höhe des Ortes, an dem sie sich befindet, anhand einer Messung des Atmosphärendrucks bereitzustellen, **dadurch gekennzeichnet, dass** sie ferner Infrarot- oder Ultraschallmittel umfasst, die konfiguriert sind, von dem Kalibrierinstrument nach Anspruch 1 aus der Ferne und auf passive Weise ein Signal zu empfangen, das Informationen trägt bezüglich der Höhe des Ortes, an dem es sich befindet, und diese Informationen zu verwenden, um die Mittel zum Bereitstellen einer Höhenangabe neu zu justieren.

3. System zum Kalibrieren einer Höhenmessvorrichtung, wobei diese Höhenmessvorrichtung Mittel umfasst, um eine Angabe der Höhe des Ortes, an dem es sich befindet, anhand einer Messung des Atmosphärendrucks bereitzustellen, wobei das Kalibrierungssystem **dadurch gekennzeichnet ist, dass** es ein batteriebetriebenes Kalibrierinstrument mit niedriger Leistung umfasst, das einen nichtflüchtigen Speicher, in dem die Höhe des Ortes, an dem es sich befindet, programmiert ist, und Infrarot- oder Ultraschallmittel zum periodischen und automatischen Fernübertragen eines Signals umfasst, das Informationen über die Höhe trägt, in der sich das Kalibrierinstrument befindet, wobei dieses Signal aus der Ferne und auf passive Weise durch die Höhenmessvorrichtung detektiert wird, die die Höheninformationen verwendet, um die Mittel zum Bereitstellen der Höhenangabe neu zu justieren.

4. Verfahren zum Eichen einer Höhenmessvorrichtung, umfassend Mittel, um eine Angabe der Höhe des Ortes, an dem sie sich befindet, anhand einer Messung des Atmosphärendrucks bereitzustellen, wobei das Verfahren mittels eines batteriebetriebenen Kalibrierinstruments mit niedriger Leistung ausgeführt wird, das einen nichtflüchtigen Speicher umfasst, in dem die Höhe des Ortes, an dem sich das Kalibrierinstrument befindet, programmiert ist, wobei das Verfahren einen Schritt umfasst, der darin besteht, mittels des Kalibrierinstruments periodisch und automatisch ein Infrarot- oder Ultraschallsignal fernzuübertragen, das Informationen bezüglich der Höhe des Ortes trägt, an dem sich das Kalibrierinstrument befindet, und einen Schritt zum Empfangen des die Informationen enthaltenden Signals durch Infrarot- oder Ultraschallmittel der Höhenmessvorrichtung umfasst, wenn diese Letztere in die Nähe des Kalibrierinstruments gelangt, wobei die Höhenmessvorrichtung die Informationen verwendet, um die Mittel zum Bereitstellen der Höhenangabe neu zu justieren.

## Claims

1. Calibration instrument for an altimetric device delivering an indication of the altitude of the location where it is located on the basis of an atmospheric pressure measurement, **characterized in that** the calibration instrument is a low power consuming device powered by a battery and which includes a non-volatile memory into which the altitude of the location where it is placed is programmed and infrared or ultrasonic means for transmitting remotely, periodically and automatically, a signal carrying data representative of the altitude at which it is placed.

2. Altimetric device including means for delivering an indication of the altitude of the place where said device is located on the basis of an atmospheric pressure measurement, **characterized in that** it further includes infrared or ultrasonic means arranged to receive from the calibration instrument according to claim 1, remotely and passively, a signal carrying data relating to the altitude of the place where it is located and for using this data to reset the means for delivering an indication of the altitude.

3. System for calibrating an altimetric device, said altimetric device including means for delivering an indication of the altitude of the place where said device is located, on the basis of an atmospheric pressure measurement, the system for calibrating being **characterized in that** it includes a low power calibration instrument powered by a battery and incorporating a non-volatile memory into which the altitude of the location where it is placed is programmed and infrared or ultrasonic means for transmitting remotely, periodically and automatically, a signal carrying data representative of the altitude at which said calibration is placed, this signal being detected remotely and passively by the altimetric device which uses the data relating to the altitude to reset the means for delivering an indication of the altitude.

4. Method for calibrating an altimetric device comprising means for providing, on the basis of an atmospheric pressure measurement, an indication of the altitude of the place of the place where said altimetric device is located, the method being implemented by means of a low-power calibration instrument powered by a battery and which includes a non-volatile memory into which the altitude of the location where the calibration instrument is placed is programmed, the method comprising the step of transmitting remotely, periodically and automatically by means of the calibration instrument an infrared or ultrasonic signal carrying data relative to the altitude of the place where the calibration instrument is located, and comprising a receiving step of said signal carrying data by infrared or ultrasonic receiving means of the altimetric device when the latter passes near said calibration instrument, said altimetric device using said data to reset said means providing the indication of the altitude.
